# EUROPEAN PATENT SPECIFICATION

(11) **EP 3 193 625 B1**
(45) Date of publication and mention of the grant of the patent: **07.08.2019**
(21) Application number: 15736037.1
(22) Date of filing: 16.06.2015
(51) Int. Cl.: A23F 5/36, A23F 5/28, A23F 5/40

(54) **MANUFACTURING SOLUBLE BEVERAGE PRODUCTS**
HERSTELLUNG VON LÖSLICHEN GETRÄNKEPRODUKTEN
FABRICATION DE PRODUITS POUR BOISSON SOLUBLES

(30) Priority: 12.09.2014 GB 201416162
(43) Date of publication of application: 26.07.2017
(73) Proprietor: Koninklijke Douwe Egberts B.V., 3532 AD Utrecht (NL)
(72) Inventor: YITZCHAK, Grant, Uxbridge Middlesex UB8 1DH (GB); SILANES KENNY, Javi, Bournville Birmingham B30 2LU (GB); HAYLETT, Andrew, Banbury Oxford OX16 2QU (GB)
(74) Representative: Boult Wade Tennant LLP
(86) International application number: PCT/IB2015/001073
(87) International publication number: WO 2016/038433

(56) References cited:
- WO-A1-94/13159
- WO-A1-2010/112776
- FR-A1- 2 202 651
- KR-B1- 880 002 027
- US-A- 3 523 568
- US-B2- 7 470 443
- IMURA N ET AL: "Effects of extract pretreatment via microfiltration on the concentration of coffee extract via reverse osmosis", ASIC, SEIZIEME COLLOQUE SCIENTIFIQUE INTERNATIONAL SUR LE CAFE: KYOTO, 9-14 AVRIL 1995,, vol. 2, 9 April 1995 (1995-04-09), pages 470-477, XP008177514, ISBN: 978-2-900212-15-8
- Lucia ET AL: "evapeos : The Green Future of Instant Coffee Ianniciello - Research Engineer [Iota] Mélanie Dubourg - Sales & Marketing Project Manager Alizé Leblanc - Sales Assistant [Iota] Glenn Pickett - VP Sales & Marketing", , 1 January 2014 (2014-01-01), XP055213355, Retrieved from the Internet: URL:http://www.ederna.com/Framework/Otidea FrameworkVendorsJS/ckfinder/userfiles/file s/ApplicationNote_EDERNA_InstantCoffee.pdf [retrieved on 2015-09-15]
- VINCZE I ET AL: "Application of nanofiltration for coffee extract concentration", DESALINATION, ELSEVIER, AMSTERDAM, NL, vol. 162, 10 March 2004 (2004-03-10), pages 287-294, XP004519456, ISSN: 0011-9164, DOI: 10.1016/S0011-9164(04)00053-0
- "GreenNews Techno: Strategies & veille technologiques en environnement - No. 124", , 21 February 2014 (2014-02-21), XP055213357, Retrieved from the Internet: URL:http://www.betatech.fr/wa_files/PRESSE _20green_20news_20techno.pdf [retrieved on 2015-09-15]
- KONSTANTINOS B PETROTOS ET AL: "Osmotic concentration of liquid foods", JOURNAL OF FOOD ENGINEERING, vol. 49, no. 2-3, 1 August 2001 (2001-08-01), pages 201-206, XP55212103, ISSN: 0260-8774, DOI: 10.1016/S0260-8774(00)00222-3
- BOMBEN J L ET AL: "Aroma recovery and retention in concentration and drying of foods", ADVANCES IN FOOD RESEARCH, ACADEMIC PRESS, NEW YORK, US, vol. 20, 1 January 1973 (1973-01-01), pages 1-111, XP009143847, ISSN: 0065-2628
- HARRISON P S: "REVERSE OSMOSIS ITS APPLICATION TO THE FOOD INDUSTRY", BRITISH FOOD JOURNAL, PETERSON PUBLISHING, DROITWICH, GB, vol. 72, no. 836, 1 May 1970 (1970-05-01), pages 73-76, XP000981591, ISSN: 0007-070X
- THIJSSEN H A C: "Concentration processes for liquid foods containing volatile flavours and aromas", JOURNAL OF FOOD TECHNOLOGY, BLACKWELL SCIENTIFIC PUBLICATIONS, GB, vol. 5, no. 3, 1 January 1970 (1970-01-01) , pages 211-229, XP002619202, ISSN: 0022-1163, DOI: 10.1111/J.1365-2621.1970.TB01561.X

## Description

### Technical Field

This invention is directed towards a process for manufacturing a soluble beverage powder. There is also disclosed a soluble beverage powder obtainable by such a process and a container containing a soluble beverage powder. In particular, the method relates to a beverage powder produced with an improved taste and aroma. A beverage may be formed by mixing a liquid, such as water and/or milk, with the soluble beverage powder. In a particular embodiment the soluble beverage powder comprises soluble coffee powder.

### Background

It is known to prepare beverages from soluble beverage powders, such as coffee, tea, fruit, milk, creamers and/or sugars. The soluble beverage powders are commonly derived from beverage concentrates such as fruit juices, milk and creamer emulsions. In particular, many instant or soluble coffee products are formed by deriving a liquid concentrate coffee extract (commonly known as coffee liquor) from coffee beans by the well-known processes of roasting, grinding and extraction. During extraction the coffee flavour and aroma are drawn from the ground roasted coffee by, for example, mixing the ground roasted coffee with water at a relatively high temperature. The extraction process can be adapted to vary the strength of the flavour and aroma of the coffee extract.

The coffee extract is subsequently subjected to a drying process to reduce the water content therein and a dry granular end product is formed. This soluble coffee product can be reconstituted into a coffee beverage by the addition of water. The drying process commonly involves the well-known processes of freeze-drying and/or spray-drying.

Various processes may be used to improve the aroma, flavour or colouring of the resulting coffee beverage. In particular, granules containing volatile aroma components may be mixed with granules of standard soluble coffee product. US-B-3989852 discloses the preparation of a coffee product in which a viscid (i.e. cohesive and of a fluid consistency) core medium containing aromatic constituents is encapsulated in a coating of film forming agent. In a particular example a core of instant coffee and coffee oil is encapsulated by pulverised instant coffee. The coating maintains the aroma by preventing the loss and degradation of the volatile aroma constituents in the core. When reconstituted into a coffee beverage, the aroma is released upon dissolution of the coating of the encapsulated granules.

Over recent years this process has been improved to provide intense bursts of aroma upon reconstitution of the encapsulated product in a coffee beverage, for example as disclosed in US-A-2002/0119235 and US-B-7470443. In particular, efforts have been made to improve the buoyancy and delay the solubility of the aromatic capsules. For example, the core is aerated and has a relatively low density, whilst the coating has a relatively low solubility and relatively high density. The coating or "shell" is commonly formed by drying of the frozen granule in spray dried coffee powder.

The encapsulated granules are mixed with regular soluble coffee granules. Upon reconstitution of the product, the encapsulated granules will float and the regular granules will sink to the bottom of the beverage containing vessel. The coating dissolves and, because of the density, the granules floating on the top of the beverage then release the aroma with the greatest impact for the consumer. The buoyancy of the granules is dependent upon the density, i.e. aeration, of the core. The aroma is thereby volatised and released in a fresh burst to the consumer. The floatation of the aroma-containing particles means that the aroma is not lost by dissolution into the bulk beverage.

In one method of producing the aromatised product disclosed in US-B-7470443 aroma coffee substances are mixed in a solution of instant coffee solids and water. The resulting aromatizing coffee solution is next provided with the required buoyancy by foaming and cooling. The solution is then formed into particles either by forming droplets and freezing them or by freezing the solution as a sheet and grinding the sheet. The particles are mixed with a dry-milled soluble coffee powder, thereby coating the particles. These particles are then dried to form dry solid coffee particles containing the aromatising composition within a hard glassy shell.

Coffee aroma can be improved by allowing the frozen encapsulated particles to dry under ambient conditions. Typically, the granules are sufficiently dry after being exposed to ambient conditions for two days. The encapsulated granules can be blended with an excess quantity of freeze dried coffee to form a final soluble coffee product.

However, the relatively long period of time required in the method of US-B-7470443 for the exposure of the coated granules to ambient conditions significantly slows down the soluble coffee production process. Furthermore, additional space and equipment are required to allow for drying the granules in ambient conditions. Similar drawbacks exist in the preparation of other soluble beverage powders.

EP0133636 discloses aromatisation capsules. EP1522223 discloses aromatisation particles containing coffee aroma constituents. US3809766 discloses a method for producing an enhanced freeze-dried coffee.

The present disclosure is therefore directed to methods and apparatus for reducing the time, space and equipment required for the production of soluble beverage powder. The disclosure further provides an improved method of manufacturing a soluble beverage powder. An apparatus suitable for such a method and a product formed by such a method is also disclosed.

### Summary of Disclosure

The present invention therefore provides a process for the manufacture of a soluble beverage powder, the process comprising the steps of;
(a) forming a mass comprising a beverage concentrate, wherein the beverage concentrate is formed into a laminar sheet;
(b) contacting at least a portion of a surface of the mass with a water permeable membrane, whereby water passes from the mass through the permeable membrane to at least partially dry the mass by providing a drying means separated from the mass by the permeable membrane, wherein the drying means comprises a drying agent which is a desiccant which retains water passing from the mass through the permeable membrane; and
(c) texturising the at least partially dried mass to form the soluble beverage powder,
   wherein, before step (b), at least a portion of the surface of the mass is coated with a substantially dry edible powder.

The present invention will now be further described. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

The present disclosure uses the terms "soluble" and "powder" which are well known in the art to refer to instant coffee beverages. Accordingly, a soluble powder is one which can be dissolved substantially in its entirety in an aqueous medium, for example, a spray dried coffee dissolved in hot water. The term "powder" refers to a beverage product formed from a plurality of particles or granules, such as spray- or freeze-dried coffee, the average size of the particles being, for example, between 0.3mm and 3mm.

The term "beverage powder" refers to any powder suitable for providing a drink when reconstituted with an aqueous medium from a powdered form. Suitable beverages include coffee, tea, fruit juices, milk, creams, chocolate, cocoa and the like, particularly in sweetened versions and/or combinations thereof. Although the present disclosure is particularly directed to the manufacture of soluble coffee powder and references coffee throughout, it will be appreciated that the aspects described apply equally to the manufacture of any such soluble beverage powder. The benefits of the invention lie in the bulk provision of aroma-containing particles through a simple and cost-effective process. In addition, for those beverage ingredients containing volatile flavours or aromas which may be lost during conventional drying processes, a greater proportion may be retained under the process conditions. These benefits are particularly found for coffee products where there are delicate aroma compounds.

A beverage concentrate is a substance which may be diluted with an aqueous medium in order to form a beverage but which is not in a dry powder form. The ingredient is "concentrated" in-so-far as it would require dilution with an aqueous beverage medium to form a desirable beverage. The beverage concentrate is a water-containing precursor to forming an instant soluble beverage powder when dried. Accordingly, the concentrate is "wet" in that is comprises an amount of moisture. Indeed, the concentrate may preferably be in the form of a slurry. The concentrate may comprise an extract, such as coffee or tea, and/or a concentrated liquid, such as fruit juices, milk, creamer emulsions and flavourings. The concentrate may further comprise an aromatising composition, such as a highly concentrated substance derived from an extract such as coffee extract.

In this disclosure the term "mass" refers to a bulk quantity of beverage concentrate, for example formed in a block or body. This mass is substantially form retaining and, when at least partially dried becomes brittle enough that it can be texturised into a plurality of encapsulated granules forming the soluble beverage powder. In other words, the mass is substantially larger than single granules of soluble beverage powder, which are typically around 2mm in diameter. The mass is substantially form-retaining but need not necessarily be solid. Preferably it is of sufficiently high viscosity that it will not flow through or substantially mix with the layer of dry edible powder, i.e. the coating/layers substantially maintain their form. In particular, the mass may be formed of agglomerated particles of beverage solids. Alternatively, the mass may be formed of frozen beverage concentrate, since the formation of ice crystals increases the viscosity of the concentrate.

In the present disclosure, the term "dry edible powder" refers to a solid powder suitable for ingestion by humans or animals. The powder may contain an amount of moisture but this will preferably be less than 10wt%, more preferably less than 6wt%. more preferably less than 5wt% and most preferably less than 3wt%. The type of dry edible powder is preferably matched to the type of beverage concentrate. The dry edible powder may comprise any suitable, preferably soluble, beverage powder, such as soluble coffee, tea, fruit, milk, creamers, chocolate, cocoa, sugars and combinations thereof. For example, when the mass is formed from a coffee extract, the dry edible powder is preferably a conventional coffee powder, such as a spray dried coffee powder having a moisture content of from 1 to 6wt%.

In the present disclosure the term "texturising" refers to the step of subjecting the dried mass to a process that breaks it apart into smaller portions. Texturising may include grinding, cutting, chopping or the like. In this disclosure, the term grinding relates to a comminution process that reduces the particle size of a substance. The comminution process may include one or more of grinding, chopping, pounding and crushing. The term "texturised" refers to the product of such texturising, for example a powder or granular material.

The process advantageously enables the continuous manufacture of encapsulated aromatised granules, which the inventors have found to provide a highly flavoured soluble beverage powder in large quantities without requiring vacuum drying (as in freeze drying), high temperatures (as in spray drying) or unduly long processing times (as in air drying). The layer of dry edible powder aids in maintaining the structure of the sheet as it dries. The present process has been found to significantly reduce the manufacturing time compared to the process of US-B-7470443.

Moreover, the comparatively gentle drying conditions serve to preserve volatile flavour components of the beverage concentrate. That is, the inventors have found that the method ensures that, once the soluble beverage powder is reconstituted in an aqueous medium, the aroma and flavours therein can be maintained. As a result, the process is suitable for the addition of additional aromatising compositions to the beverage concentrate. The resulting aromatised soluble coffee powder can be mixed with uncoated or standard soluble beverage products to provide an improved aroma in a beverage.

Preferably the beverage powder comprises a coffee powder, a milk powder, a tea powder, a juice powder, creamer powder, cocoa powder, a chocolate powder, sugar powder or combinations thereof, and preferably consists of a coffee powder, a milk powder, a tea powder, a juice powder, creamer powder, cocoa powder, a chocolate powder, sugar powder or combinations thereof. Preferably the beverage powder and/or the dry edible powder is a coffee powder.

Preferably the mass is formed from a beverage concentrate comprising at least 30% solids, preferably from a coffee extract comprising at least 30wt% coffee solids. Preferably the mass is formed from a beverage concentrate comprising 50% to 85% solids by weight, especially when the mass is frozen and preferably at least 70% solids by weight. By solids it is meant the residue which would remain is the mass was completely dehydrated. The solids may be soluble and/or insoluble solids, but are typically substantially soluble solids. Instead of freezing, the mass may have a sufficiently high viscosity by the provision of beverage concentrate with a relatively high concentration by weight. Beverage concentrate comprising at least 70% coffee solids by weight are suitable. Beverage concentrate comprising at least 70% tea solids by weight are suitable. The solids may also contain other beverage ingredients as discussed above. The mass may be formed by extruding the beverage concentrate as a malleable intermediate product into the shape of the sheet.

Preferably the dry edible powder has a moisture content of less than 6wt%, preferably less than 4wt%, more preferably less than 2wt%. Preferably the dried mass has a moisture content of at most 6wt%, preferably less than 3wt%.

Preferably the mass is formed by shaping and/or at least partially freezing the beverage concentrate. This increases the viscosity of the composition, despite the presence of an amount of water which permits the concentrate to be pumped, stored and distributed before conducting the process.

The beverage concentrate is preferably maintained in the liquid or ice crystal phase whilst the dry edible is applied to the mass to ensure that the soluble coffee powder adheres to the mass. Sufficient adherence is achieved by controlling the temperature during the process to ensure that at some point after the edible dry powder is applied to the mass it adheres thereto. It is preferable to avoid the dry edible powder having a higher temperature than the mass upon initial contact between the two or the mass may melt. Therefore, it is preferred that the temperature of the dry edible powder is matched to that of the mass upon initial contact and that the temperature is subsequently increased to allow the powder to adhere to the mass. A similar temperature rise, although over a longer period of two days, is used in the method of US-B-7470443.

Preferably the mass is frozen in the forming step, thereby providing it with a sufficiently high viscosity. The mass may be formed of beverage concentrate in the shape of the sheet. A batch process may advantageously be employed, wherein each sheet has a uniform shape and/or thickness such that the drying process can be controlled accurately. Alternatively, the sheet is formed by freezing liquid beverage concentrate to form a malleable intermediate product and subsequently extruding the intermediate product into the shape of the sheet. The liquid beverage concentrate may be frozen by being fed onto a conventional freezing belt and cold air is directed towards the liquid. The sheet may then be formed by extruding the intermediate product through a die having a substantially rectangular or the like shape. Instead of a die, feed rollers may alternatively be utilised. The extrusion enables a continuous production process to be used, as the extruded sheet can be fed directly onto a moving support surface, such as the permeable membrane, prior to the provision of the dry edible powder thereon. Alternatively, the sheet may be formed by controlling the flow of liquid onto the freezing belt, such that the intermediate product has a predetermined and substantially continuous thickness.

Preferably the step of texturising comprises grinding and/or sieving the dried mass.

In the step of forming a mass comprising a beverage concentrate, the beverage concentrate is formed into a laminar sheet. The term "laminar sheet" is used in the present disclosure to describe a substantially planar. The cross- sectional shape of the sheet is preferably a substantially rectangular cuboid having two opposing major faces (an upper and a lower surface) that each has a significantly greater surface area than any of the other faces. The sheet may be in the form of a single continuous mass or be one of a plurality of sheets moving along a production line. However, the sheet of the present disclosure is not restricted to a discrete planar shape having two distinct ends. Instead, the sheet may be formed of a substantially continuous planar layer extending along the production apparatus from the point at which the sheet is formed to the point at which it is texturised. A sheet can advantageously be incorporated into a continuous production line, as one of the opposing faces may be supported by a conveyor.

Preferably the laminar sheet has a thickness in the range of 1mm to 4 mm and more preferably in the range of 1.5mm to 2.5mm. Such thicknesses have been found to produce aromatised granules of a suitable size for a soluble beverage powder. This also allows for quick drying of the mass. Preferably the thickness is substantially constant since this allows for controlled drying. The thickness of the sheet substantially corresponds to the particle diameter of the desired powder product.

Preferably the coating covers substantially all of the surface of the mass. When the mass is a laminar sheet, the coating will preferably cover all of the upper and lower sheet surfaces. The coating may not cover the edges surrounding the mass.

Preferably in the step of coating the surface of the mass with a substantially dry edible powder, the substantially dry edible powder is coated onto an upper and a lower surface of the laminar sheet. This allows even drying of the beverage mass throughout. By enabling water to evaporate from both sides of the sheet the rate of drying is increased.

Preferably dry edible powder is provided on at least a part of an opposing face by pouring the dry edible powder thereon and/or dry edible powder is provided on at least a part of an opposing face by introducing the dry edible powder between the sheet and a support surface for carrying the sheet. Therefore, the lower opposing side of the sheet can support the sheet on a support surface and still have dry edible powder thereon.

Preferably the surface of the mass is coated with dry edible powder to form a coating having a thickness in the range of 5mm to 10mm. The lower limit may be up to twenty times the weight of the beverage concentrate. For example, for each 1 gram of frozen beverage concentrate there may be provided between 10 grams and 20 grams of dry edible powder in each layer thereof. The layer should not be too thick to avoid wasting powder and energy in the process, but not too thin such that insufficient drying is provided or the powder dissolves into the drying mass.

Preferably the water permeable membrane comprises a wire mesh. The wire mesh is sufficiently strong to support the mass during the process and provides holes through which water can evaporate. Preferably the wire mesh is very fine, which advantageously improves the rate of diffusion. The mesh grade should be selected for the particle size of the dry edible powder, such that water can diffuse through it but not the powder. The water permeable membrane is preferably hydrophilic so water passes through it and the process of reverse osmosis across the membrane is improved.

Preferably the permeable membrane forms an interface with substantially all of the surface of the mass and/or dry edible powder. It will be understood that "substantially all" means that at least 95% of the surface forms an interface with the permeable membrane, more preferably 97% and more preferably 100%. Generally, the larger the surface area contacted by the permeable membrane the greater the drying rate. Again, the permeable membrane may not contact the edges of a laminar mass.

The method further comprises providing a drying means separated from the mass by the permeable membrane. The drying agent increases the drying rate by drawing away water diffused through the permeable membrane.

The drying means comprises a drying agent which is a desiccant which retains the water passing from the mass through the permeable membrane. The drying agent is preferably a food-grade drying agent and may be selected from one or more of silica, silica dioxide, magnesium oxide and aluminium silicate. Preferably the drying means is configured to replace spent drying agent with fresh drying agent. In this context the spent drying agent is drying agent containing water from the mass and fresh drying agent is dry. Accordingly, the spent drying agent has a reduced ability to absorb further moisture, compared to fresh drying agent.

Preferably the method further comprises a step of regenerating the drying agent such that it can be reused. Production costs are therefore reduced, rather than needing to replace the drying agent. A wet drying agent can be regenerated by dehydrating with a heater.

The mass may be conveyed countercurrent to the permeable membrane and the drying agent. To improve the countercurrent movement a lubricant or non-stick coating, such as Teflon (RTM), may be provided between the mass or dry edible powder and the permeable membrane. A countercurrent movement provides a maximum diffusion gradient from the mass, as the driest part of the mass is provided adjacent the most recently regenerated part of the drying agent.

Alternatively the mass is conveyed concurrent with the permeable membrane.

Preferably the drying agent is conveyed by a belt driven by driving means, the belt comprising the permeable membrane attached to an inner belt and the drying agent being provided therebetween. The driving means may comprise at least one roller operable to be driven rotatably to drive the belts about a continuous path.

In addition to the drying agent, other drying means may be employed as the solids concentration by weight increases. For example, drying means that employ microwave energy, convection or radiation may be utilised in the later stages of the movement of the mass through the production process.

In the present disclosure the term "dried mass" does not necessarily mean that the mass is completely dry prior to the texturising step. Preferably the mass is dried to at least approximately 85% beverage solids by weight, more preferably at least approximately 90% beverage solids by weight and even more preferably around 95% beverage solids by weight.

In one embodiment the mass is dried to at least approximately 85% coffee solids by weight. In order to provide a final beverage powder it may be necessary to achieve a lower moisture content and this can be achieved by a conventional further step of drying the soluble beverage powder.

The permeable membrane enables water sublimated from the mass to diffuse through it. As the mass dries, its composition changes and the concentration of beverage solids therein increases. Initially, the mass may comprise 30-80% by weight beverage solids. After drying this may increase to approximately 95% by weight beverage solids.

The temperature and/or pressure are controlled to maintain the mass in a highly viscous state and to ensure that the dry edible powder adheres to the mass. Preferably they are controlled to maintain the mass in a substantially ice crystal and liquid state. The mass is maintained in a sufficiently solid or highly viscous state to prevent it from flowing from the production line. Furthermore, a balance should be kept between the rate of diffusion and the temperature required to keep the frozen mass solid.

In a continuous production line a series of zones may be provided sequentially along the drying apparatus and each zone may be controlled at a certain temperature and/or pressure. The series of zones maintains a balanced rate of diffusion as the mass dries.

For example, the drying pressure can be atmospheric pressure and the drying temperature may be maintained between 10°C and 70°C. Higher temperatures are preferably avoided to avoid melting the dry edible powder and/or aroma composition.

Upon exit from the drying apparatus the dried mass is sufficiently solid enough to stay in shape, yet sufficiently soft and malleable that it can be texturised. Preferably the composition and temperature is such that the formation of fines (i.e. very small particles of soluble coffee product) can be avoided. A suitable composition for the dried mass at this stage is approximately 85 to 95% by weight beverage solids.

During the texturising process the dried mass is broken into smaller portions, for example having an average diameter of around 2mm. An exemplary method of texturising comprises utilising roller cutters located at the end of a continuous drying apparatus. The rollers of the cutters comprise a plurality of cutting edges extending therefrom.

The texturising process may further complete the encapsulation of the aromatised granules. For example, when the mass is cut or chopped the mass will be squeezed along the cutting edge. This squeezing brings together opposing parts of the surface(s) with soluble coffee powder thereon. The dry edible powder meets and is sealed together, thereby forming an encapsulated granule comprising beverage concentrate coated with (i.e. encapsulated within) the dry edible powder. A further coating may be applied by tumbling or blending the granules with soluble coffee powder to ensure continuity of the coating and fully encapsulated granules. A further coating is particularly useful where the texturising does not necessarily involve the squeezing of the mass to form seals, such as in grinding.

The resulting texturised granules may be subjected to further processing steps. Depending upon the texturising process, more dry edible powder may need to be applied to the soluble beverage powder to form fully encapsulated aromatised granules. The application may be in any suitable way known in the art, such as blending, mixing or tumbling the soluble beverage powder together with the dry edible powder.

If the mass is dried to less than 95%, further processing will be required such that the soluble beverage powder supplied to the consumer is around 95% beverage solids by weight. Therefore the process may further comprise, after the texturising step, the step of further drying the texturised granules. The drying process may be, for example, air-drying, freeze-drying or spray-drying, and may be in the same step as mixing the granules with further dry edible powder to complete the encapsulation.

Preferably, after the texturising step, the method may comprise mixing the soluble beverage powder with a further beverage powder, preferably a soluble coffee powder. This mixture can be dried in the further drying step, or packaged in a container and left to reach equilibrium in which the average beverage solids by weight is at least 95%. The container may be relatively large, for example holding 1000kg of product, or relatively small, for example holding 100g of product. For example, uncoated standard soluble beverage powder with above 95% coffee solids by weight are mixed with the prepared soluble beverage powder with less than 95% coffee solids by weight (e.g. between 85% and 90%). The benefit of allowing the equilibrium to be met in the container is that the prepared soluble beverage powder will need to be dried less, thereby saving process energy and time.

Preferably, the method further comprising a step of packaging the soluble beverage powder.

Preferably the beverage concentrate is a liquid extract derived from green coffee beans, preferably by the processes of grinding, roasting and extraction. In a preferred embodiment the beverage concentrate comprises coffee extract. In this disclosure, unless otherwise required by the context, the coffee substance produced by the roasting of green coffee beans may be in the form of a roasted coffee bean or in some other form produced by onward processing steps such as grinding, decaffeination, pressing, etc. Particular examples of such a coffee substance includes roasted coffee beans, roasted expeller cake, roasted and flaked coffee. The coffee extract may be dried instant or soluble coffee. Such a liquid extract and processes are well-known.

Preferably the beverage concentrate further comprises an aroma composition. The aroma composition may comprise any suitable type of aroma constituents. For example, the aroma composition may be oil based, such as coffee oil or hydrolysed coffee oil, or aqueous-based. The aroma compositions disclosed in US-A-2002/0119235 and US-B-7470443 are also suitable, which comprise coffee aroma constituents and a volatile organic carrier constituent. The aroma composition may be obtained by treating roasted and ground coffee in a percolator with saturated steam to separate essential aroma constituents. The separated aroma constituents are obtained as condensate by passing the vapours in a glycol chilled condenser. The aroma constituents of low volatility may be removed as described in US-B-7470443, which is incorporated herein by reference.

The coffee extract is combined with water/oil based aroma to produce a commixture (i.e. a combination of the two). The aroma composition may be obtained by dissolving freeze dried coffee in water. For example, the coffee extract may be dissolved in an aroma composition solution or the coffee extract and aroma composition may be blended together. For example, as disclosed in Example 3 of US-B-7470443, an aroma composition solution may be blended with evaporated Arabica instant coffee extract.

The commixture of coffee extract and aroma composition, which is typically in liquid form, may first be cooled and foamed to achieve correct foamed product density. The foamed product density is selected to control the dried product density. The dried product density is preferably such that the core is buoyant and the granule will float to the surface in the resulting beverage. A preferred target dried product density is from 200 to 300 grams per litre.

In addition, the foaming gas may be selected to improve the aroma. Nitrogen and carbon dioxide are known suitable gases. Atmospheric air can also be used for cost-effective foaming.

The method of foaming and the relationship between the foaming density and dried product density is known in the art, for example as disclosed in US-B-7470443. The method is controlled by adapting the amount of gas provided to the commixture dependent upon the amount of water available. For example, if there is less water available, i.e. there is a higher concentration of solids, more gas is required to ensure that when the water evaporates less voids are left behind in the commixture. A solution comprising 50% by weight coffee solids may be foamed to 650 grams per litre to achieve the preferred target dried product density. A solution containing 85% by weight coffee solids may be foamed to 380 grams per litre to achieve the preferred target dried product density.

Further preferably the dry edible powder comprises soluble coffee powder. The soluble (i.e. instant) coffee powder may be any type of instant coffee powder, for example formed by the known processes of roasting green coffee beans, grinding the beans and subjecting the ground beans to an extraction process. The coffee powder may subsequently be formed by the well-known drying process of spray-drying and/or freeze-drying. Spray-drying is preferable as it creates powder with a more porous micro-structure, thereby improving its capability to absorb water from the coffee extract. The powder is further preferably milled to make the powder particles relatively small and thereby increase the level of surface area contact with the mass.

In the embodiment where the prepared soluble coffee powder is mixed with standard soluble coffee powder, the soluble coffee powder therefore comprises aromatised granules and uncoated soluble coffee granules. The aromatised granules will provide the resultant mixture with bursts of aroma when mixed with an aqueous medium.

There is described herein (not pertaining to the invention) a soluble beverage powder obtainable by the process described herein.

There is described herein (not pertaining to the invention) a container comprising the soluble beverage powder as described herein, wherein the container is preferably a jar, or a pad, capsule or cartridge for a beverage preparation machine. A user may open the container and mix a measure of the dried mixed soluble coffee product with an aqueous medium to form a beverage.

There is described herein (not pertaining to the invention) a process for the preparation of a beverage comprising the step of mixing an aqueous medium with the soluble beverage powder described herein.

There is described herein (not pertaining to the invention) a beverage preparation system for preparing a beverage according to the method described herein, the system comprising a container as described herein and a beverage preparation machine for introducing the aqueous medium into the container to dispense the beverage therefrom.

### Brief Description of the Drawings

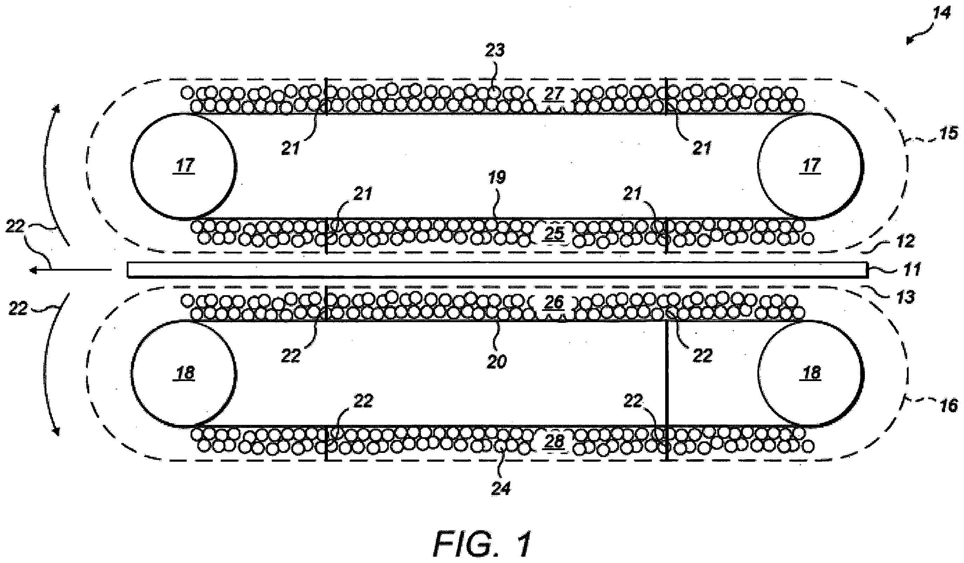

By way of example only, aspects of the present disclosure are now described with reference to and as show in Figure 1 , which is a schematic side elevation of a drying apparatus of the present disclosure.

### Detailed Description

The present disclosure is generally directed towards a process for manufacturing a soluble beverage product. The following description is particularly directed towards the process of manufacturing a soluble coffee powder, but the aspects described are equally applicable to the manufacture of any other suitable soluble beverage powder.

Once the sheet has been formed it is passed onto a moving support surface, such as a conveyor belt. The two opposing major faces of the sheet are coated with dry edible powder. For example, the dry edible powder is poured onto the upper of the major faces of the sheet, via a spout (such as a nozzle or other suitable means). The spout is operable to control the flow of powder to ensure that a layer of dry edible powder of a predetermined and continuous thickness is formed on the upper sheet face. The dry edible powder is pushed onto the lower of the major faces of the sheet via a weir. The weir is operable to ensure that a layer of a predetermined and continuous thickness is formed on the lower sheet face. For example, the weir may comprise a step down in the support surface and powder is injected through the step into the gap formed under the sheet.

As a result of this process, the sheet rests on a layer of dry edible powder supported by the support surface and a further layer of dry edible powder is coated on the upper face of the sheet. The sheet and/or dry edible powder is brought into contact with a water permeable membrane. The permeable membrane may be the support surface onto which the sheet is passed prior to being coated with the dry edible powder.

Figure 1 illustrates this process and shows a sheet 11 having upper and lower powder layers 12, 13 of dry edible powder thereon being passed through a drying apparatus 14. The drying apparatus 14 comprises an upper belt 15, 19 and a lower belt 16, 20 which rotate about pairs of upper and lower rollers 17, 18 respectively. Each belt comprises a permeable membrane 15, 16 and an inner belt 19, 20. The upper and lower belts 15, 19, and 16, 20 are arranged such that the sheet 11 lies between opposing sections of the belts 15, 19, and 16, 20, with the permeable membrane 15 of the upper belt in contact with the powder layer 12 on the upper sheet face and the permeable membrane 16 of the lower belt in contact with the underlying powder layer 13 on the lower sheet face.

The inner belts 19, 20 are mounted on the upper and lower rollers 17, 18 respectively such that as the upper and lower rollers 17, 18 rotate, this drives the upper and lower belts 15, 19, and 16, 20. Upper and lower membrane supports 21, 22 connect the membranes 15, 16 with the inner belts 19, 20 respectively such that the membranes 15, 16 move with the inner belts 19, 20.

As indicated by the arrows 22, the upper and lower belts 15, 19 and 16, 20 move in the same direction as (i.e. concurrently with) the sheet 11. The movement of the upper and lower membranes 15, 16 support and aid the movement of the sheet 11. However, the sheet 11 may be driven through the drying apparatus 14 by alternative driving means such as conveyor belts on either side of the drying apparatus 14. The upper and/or lower membranes 15, 16 may therefore move countercurrent to the sheet 11.

To aid the flow of the sheet in the countercurrent or concurrent movement, a lubricant and/or non-stick coating may be provided on any or all of the membranes 15,16, the opposing faces of the sheet 11 and, the powder layers 12,13.

A drying agent 23, 24 is preferably located in a gap formed between the membranes 15, 16 and inner belts 19, 20. As illustrated, the drying agent 23, 24 may comprise a plurality of beads.

The drying agent 23, 24 is circulated by the movement of the belts 15, 19 and 16, 20 when the drying agent 23, 24 is located adjacent to the sheet 11 (see sections marked 25, 26) it absorbs moisture from the sheet 11 as part of the drying process. When the drying agent 23, 24 is moved away from the sheet 11 (see sections marked 27, 28) the drying agent 23, 24, 25 is regenerated by suitable regeneration means (not shown). The regeneration means are matched to the type of drying agent 23, 24 employed and may, for example, be a drying oven that cooks and bakes the drying agent 23, 24. The drying agent 23, 24 may be driven around concurrently or countercurrently to the upper and lower membranes 15, 16 and/or the sheet 11.

Although the terms "upper" and "lower" have been used in the present disclosure and Figure 1 shows sheet 11 moving horizontally, such an orientation is not intended to restrict the scope of the present disclosure. Instead, for example, the sheet 11 may move vertically or at an angle and first and second membranes 15, 16 may be provided on either side of it.

Laboratory-scale examples of the process of manufacture of the encapsulated granules are now described.

### Example 1

Aroma is recovered from the soluble coffee process in the form of coffee oil. Concentrated coffee extract with coffee solids by weight of 30% is formed by concentrating weak coffee extract derived from a water extraction of roast and ground coffee. The coffee oil and coffee extract are combined.

The coffee oil and coffee extract are cooled and foamed, i.e. aerated, to a density of 1080 grams per litre, which achieves a dried product density of between 200 and 300 grams per litre. This viscous foamed extract is poured onto a flat surface to produce a sheet 1.5mm thick and frozen to -20°C.

A 20mm layer of silica dioxide is inserted into the bottom of a tray and a first fine wire mesh is placed on top of the silica dioxide. A first 5mm layer of soluble coffee powder is poured over the mesh and the sheet placed on top of the soluble coffee powder. A second 5mm layer of soluble coffee powder is poured over the upper face of the sheet and a second fine wire mesh is placed on top of second layer of soluble coffee powder. A 20mm layer of silica dioxide is located over the second fine wire mesh.

The apparatus is left to dry for one hour at atmospheric temperature. The sheet is subsequently removed and cut into 2mm x 2mmm sections, thereby forming aromatised granules of soluble coffee product.

### Example 2

Aroma is recovered from the soluble coffee process in the form of an aqueous based aroma composition utilising the method described in Example 1 of US-B-7470443. It is noted that the aqueous aroma can be modified or concentrated further by concentrating or fractionation. Concentrated coffee extract with coffee solids by weight of 50% is formed by concentrating weak coffee extract derived from a water extraction of roast and ground coffee. The aroma composition and coffee extract are combined.

The aroma composition and coffee extract are cooled and foamed, i.e. aerated, to a density of 650 grams per litre. This viscous foamed extract is poured onto a flat surface to produce a sheet 4mm thick and frozen to -50°C.

The tray is arranged in a similar manner to Example 1, except that 40mm layers of silica dioxide are used. The apparatus is left to dry for eight hours at atmospheric temperature. The sheet is subsequently removed and cut into 2mm x 2mmm sections, thereby forming aromatised granules of soluble coffee product.

### Example 3

Aroma is recovered from the soluble coffee process by dissolving freeze dried coffee into water from a range of 85% to 50% by weight solids. Concentrated coffee extract with coffee solids by weight of 85% is formed by concentrating weak coffee extract derived from a water extraction of roast and ground coffee. The aroma and coffee extract are combined.

The coffee oil and coffee extract are cooled and foamed, i.e. aerated, to a density of 382 grams per litre. This viscous foamed extract is poured onto a flat surface to produce a sheet 2mm thick.

The tray is arranged in a similar manner to Examples 1 and 2, and 30mm layers of silica dioxide are used. The apparatus is left to dry for two hours at atmospheric temperature. The sheet is subsequently removed and cut into 2mm x 2mmm sections, thereby forming aromatised granules of soluble coffee product.

## Claims

1. A process for the manufacture of a soluble beverage powder, the process comprising the steps of;
(a) forming a mass comprising a beverage concentrate, wherein the beverage concentrate is formed into a laminar sheet;
(b) contacting at least a portion of a surface of the mass with a water permeable membrane, whereby water passes from the mass through the permeable membrane to at least partially dry the mass by providing a drying means separated from the mass by the permeable membrane, wherein the drying means comprises a drying agent which is a desiccant which retains water passing from the mass through the permeable membrane; and
(c) texturising the at least partially dried mass to form the soluble beverage powder,
wherein, before step (b), at least a portion of the surface of the mass is coated with a substantially dry edible powder.

2. A process according to claim 1, wherein the beverage powder comprises a coffee powder, a milk powder, a tea powder, a juice powder, a cocoa powder or a chocolate powder; and/or
wherein the dry edible powder is a coffee powder.

3. A process according to claim 1 or claim 2, wherein the mass is formed from a beverage concentrate comprising at least 30% solids, and preferably:
(i) from a coffee extract comprising at least 30wt% coffee solids; and/or
(ii) from a beverage concentrate comprising 50% to 85% solids by weight and preferably at least 70% solids by weight.

4. A process according to any of the preceding claims, wherein the mass is formed by shaping and/or at least partially freezing the beverage concentrate.

5. A process according to any of the preceding claims, wherein the water permeable membrane comprises a wire mesh.

6. A process according to any of the preceding claims, wherein the step of texturising comprises grinding and/or sieving the at least partially dried mass.

7. A process according to any of the preceding claims, wherein the coating covers substantially all of the surface of the mass.

8. A process according to any of the preceding claims, wherein the laminar sheet has a thickness in the range of 1mm to 4mm, and wherein the thickness is substantially constant.

9. A process according to claim 8, wherein in the step of coating the surface of the mass with a substantially dry edible powder, the substantially dry edible powder is coated onto an upper and a lower surface of the laminar sheet.

10. A process according to any of the preceding claims, wherein the dry edible powder has a moisture content of less than 6wt%, and/or wherein the dried mass has a moisture content of at most 6wt%.

11. A process according to any one of the preceding claims wherein the surface of the mass is coated with dry edible powder to form a coating having a thickness in the range of 5mm to 10mm.

12. A process according to any one of the preceding claims wherein the drying means is configured to replace spent drying agent with fresh drying agent, and preferably further comprises a step of regenerating the drying agent.

13. A process according to any one of the preceding claims wherein the mass is dried to at least approximately 85% coffee solids by weight.

14. A process according to any one of the preceding claims, the method further comprising drying the soluble beverage powder.

15. A process according to any one of the preceding claims comprising, after the texturising step, the process of mixing the soluble beverage powder with a further beverage powder, preferably a soluble coffee powder.

16. A process according to any one of the preceding claims, the method further comprising a step of packaging the soluble beverage powder.

## Patentansprüche

1. Verfahren zur Herstellung eines löslichen Getränkepulvers, wobei das Verfahren die folgenden Schritte umfasst:
(a) Bilden einer Masse, die ein Getränkekonzentrat umfasst, wobei das Getränkekonzentrat zu einer laminaren Folie geformt wird;
(b) Berühren von mindestens einem Abschnitt der Oberfläche der Masse mit einer wasserdurchlässigen Membran, wobei Wasser aus der Masse die durchlässige Membran passiert, um die Masse mindestens teilweise durch Zugabe eines durch die durchlässige Membran von der Masse getrennten Trocknungsverfahrens zu trocknen, wobei das Trocknungsverfahren ein Trockenmittel umfasst, das ein Feuchtigkeitsabsorber ist, der die durchlässige Membran passierendes Wasser zurückhält; und
(c) Texturieren der mindestens teilweise getrockneten Masse, um das lösliche Getränkepulver zu bilden,
wobei vor Schritt (b) mindestens ein Abschnitt der Oberfläche der Masse mit einem im Wesentlichen trockenen essbaren Pulver überzogen ist.

2. Verfahren nach Anspruch 1, wobei das Getränkepulver ein Kaffeepulver, ein Milchpulver, ein Teepulver, ein Saftpulver, ein Kakaopulver oder ein Schokoladenpulver umfasst; und/oder
wobei das trockene essbare Pulver ein Kaffeepulver ist.

3. Verfahren nach Anspruch 1 oder Anspruch 2, wobei die Masse aus einem Getränkekonzentrat gebildet wird, das mindestens 30 % Feststoffe umfasst, und vorzugsweise:
(i) aus einem Kaffeeextrakt, das mindestens 30 Gew.-% Kaffeefeststoffe umfasst; und/oder
(ii) aus einem Getränkekonzentrat, das 50 % bis 85 % Feststoffe nach Gewicht und vorzugsweise mindestens 70 % Feststoffe nach Gewicht umfasst, gebildet wird.

4. Verfahren nach einem der vorstehenden Ansprüche, wobei die Masse durch Formen und/oder mindestens teilweises Gefrieren des Getränkekonzentrats gebildet wird.

5. Verfahren nach einem der vorstehenden Ansprüche, wobei die wasserdurchlässige Membran ein Drahtgeflecht umfasst.

6. Verfahren nach einem der vorstehenden Ansprüche, wobei der Schritt des Texturierens das Mahlen und/oder Sieben der mindestens teilweise getrockneten Masse umfasst.

7. Verfahren nach einem der vorstehenden Ansprüche, wobei die Beschichtung im Wesentlichen die gesamte Oberfläche der Masse bedeckt.

8. Verfahren nach einem der vorstehenden Ansprüche, wobei die laminare Folie eine Dicke im Bereich von 1 mm bis 4 mm aufweist, und wobei die Dicke im Wesentlichen konstant ist.

9. Verfahren nach Anspruch 8, wobei im Schritt der Beschichtung der Oberfläche der Masse mit einem im Wesentlichen trockenen essbaren Pulver das im Wesentlichen trockene essbare Pulver auf eine obere und eine untere Oberfläche der laminaren Folie aufgetragen wird.

10. Verfahren nach einem der vorstehenden Ansprüche, wobei das trockene essbare Pulver einen Feuchtigkeitsgehalt von weniger als 6 Gew.-% aufweist und/oder wobei die getrocknete Masse einen Feuchtigkeitsgehalt von höchstens 6 Gew.-% aufweist.

11. Verfahren nach einem der vorstehenden Ansprüche, wobei die Oberfläche der Masse mit einem trockenen essbaren Pulver beschichtet wird, um eine Beschichtung mit einer Dicke im Bereich von 5 mm bis 10 mm zu bilden.

12. Verfahren nach einem der vorstehenden Ansprüche, wobei das Trocknungsverfahren konfiguriert ist, um verbrauchtes Trockenmittel durch frisches Trockenmittel zu ersetzen, und vorzugsweise ferner einen Schritt des Regenerierens des Trockenmittels umfasst.

13. Verfahren nach einem der vorstehenden Ansprüche, wobei die Masse auf mindestens etwa 85 % Kaffeefeststoffe nach Gewicht getrocknet wird.

14. Verfahren nach einem der vorstehenden Ansprüche, wobei das Verfahren ferner das Trocknen des löslichen Getränkepulvers umfasst.

15. Verfahren nach einem der vorstehenden Ansprüche, das nach dem Schritt des Texturierens das Verfahren des Mischens des löslichen Getränkepulvers mit einem weiteren Getränkepulver, vorzugsweise einem löslichen Kaffeepulver, umfasst.

16. Verfahren nach einem der vorstehenden Ansprüche, wobei das Verfahren ferner einen Schritt des Verpackens des löslichen Getränkepulvers umfasst.

## Revendications

1. Processus pour la fabrication d'une boisson en poudre soluble, le processus comprenant les étapes consistant à ;
(a) former une masse comprenant un concentré de boisson, dans lequel le concentré de boisson est formé en une feuille laminaire ;
(b) mettre en contact au moins une partie d'une surface de la masse avec une membrane perméable à l'eau, moyennant quoi de l'eau passe de la masse à travers la membrane perméable pour sécher au moins partiellement la masse en fournissant un moyen de séchage séparé de la masse par la membrane perméable, dans lequel le moyen de séchage comprend un agent de séchage qui est un déshydratant qui retient l'eau passant de la masse à travers la membrane perméable ; et
(c) texturiser la masse au moins partiellement séchée pour former la boisson en poudre soluble,
dans lequel, avant l'étape (b), au moins une partie de la surface de la masse est revêtue d'une poudre comestible essentiellement sèche.

2. Processus selon la revendication 1, dans lequel la boisson en poudre comprend une poudre de café, une poudre de lait, une poudre de thé, une poudre de jus, une poudre de cacao ou une poudre de chocolat ; et/ou
dans lequel la poudre comestible sèche est une poudre de café.

3. Processus selon la revendication 1 ou la revendication 2, dans lequel la masse est formée à partir d'un concentré de boisson comprenant au moins 30 % de solides, et de préférence :
(i) à partir d'un extrait de café comprenant au moins 30 % en poids de solides de café ; et/ou
(ii) à partir d'un concentré de boisson comprenant 50 % à 85 % de solides en poids et de préférence au moins 70 % de solides en poids.

4. Processus selon l'une quelconque des revendications précédentes, dans lequel la masse est formée par mise en forme et/ou congélation au moins partielle du concentré de boisson.

5. Processus selon l'une quelconque des revendications précédentes, dans lequel la membrane perméable à l'eau comprend un treillis métallique.

6. Processus selon l'une quelconque des revendications précédentes, dans lequel l'étape de texturisation comprend le broyage et/ou le tamisage de la masse au moins partiellement séchée.

7. Processus selon l'une quelconque des revendications précédentes, dans lequel le revêtement couvre essentiellement toute la surface de la masse.

8. Processus selon l'une quelconque des revendications précédentes, dans lequel la feuille laminaire a une épaisseur dans la plage de 1 mm à 4 mm, et dans lequel l'épaisseur est essentiellement constante.

9. Processus selon la revendication 8, dans lequel dans l'étape de revêtement de la surface de la masse avec une poudre comestible essentiellement sèche, la poudre comestible essentiellement sèche est revêtue sur une surface supérieure et une surface inférieure de la feuille laminaire.

10. Processus selon l'une quelconque des revendications précédentes, dans lequel la poudre comestible sèche a une teneur en humidité inférieure à 6 % en poids, et/ou dans lequel la masse séchée a une teneur en humidité d'au plus 6 % en poids.

11. Processus selon l'une quelconque des revendications précédentes dans lequel la surface de la masse est revêtue de poudre comestible sèche pour former un revêtement ayant une épaisseur dans la plage de 5 mm à 10 mm.

12. Processus selon l'une quelconque des revendications précédentes dans lequel le moyen de séchage est configuré pour remplacer l'agent de séchage épuisé par de l'agent de séchage frais, et comprend en outre de préférence une étape de régénération de l'agent de séchage.

13. Processus selon l'une quelconque des revendications précédentes dans lequel la masse est séchée à au moins approximativement 85 % de solides de café en poids.

14. Processus selon l'une quelconque des revendications précédentes, le procédé comprenant en outre un séchage de la boisson en poudre soluble.

15. Processus selon l'une quelconque des revendications précédentes comprenant, après l'étape de texturisation, le processus de mélange de la boisson en poudre soluble avec une autre boisson en poudre, de préférence une poudre de café soluble.

16. Processus selon l'une quelconque des revendications précédentes, le procédé comprenant en outre une étape de conditionnement de la boisson en poudre soluble.
